# EUROPEAN PATENT APPLICATION

(11) **EP 1 927 855 A1**
(43) Date of publication of application: **04.06.2008**
(21) Application number: 06810384.5
(22) Date of filing: 21.09.2006
(51) Int. Cl.: G01N 29/14, G01M 13/02, G01M 13/04, F16C 19/52, F16C 41/00

(54) **ACOUSTIC EMISSION MEASURING DEVICE, POWER TRANSMISSION DEVICE, AND ROLLING BEARING DEVICE**

(30) Priority: 21.09.2005 JP 2005274210; 21.09.2005 JP 2005274214
(71) Applicant: JTEKT Corporation, Osaka-shi Osaka 542-8502 (JP); Murakami, Isao, Izumi-shi Osaka 594-0083 (JP)
(72) Inventor: MURAKAMI, Isao, Izumi-shi, Osaka 594-0083 (JP); OGUMA, Noriyasu, Osaka-shi, Osaka 542-8502 (JP)
(74) Representative: Wiedemann, Peter
(86) International application number: PCT/JP2006/318724
(87) International publication number: WO 2007/034867

(57) **Abstract**

An acoustic emission measuring device in which a piezoelectric element (63) used as an AE sensor is secured to the inner ring (62) of a ball bearing (61) fixedly fitted onto a rotating shaft (60). The axial end face of a roughly tire-shaped case (65), which is capable of rotating in synchronism with the inner ring (62) and storing a first coil in which a current flows from the piezoelectric element (63), is secured to the inner ring (62). The axial end face of a roughly tire-shaped case (66) for storing a second coil is secured to an outer ring (64). The first coil and the second coil are oppositely disposed radially outside of the rotating shaft (60) so that the first coil and the second coil can face each other in the radial direction.

## Description

### BACKGROUND OF THE INVENTION

The present invention relates to an acoustic emission (AE) measuring device. The present invention also relates to a power transmission device having a power transmission member and an AE sensor. The present invention also relates to a rolling bearing device having a rolling bearing and an AE sensor.

A conventional apparatus with AE sensor that is provided with an AE measuring device is described in JP 9-26414 A.

In this apparatus with an AE sensor, an AE signal from the AE sensor mounted on a rotary part is frequency-modulated by a frequency modulation circuit, and the modulated AE signal is amplified. The amplified AE signal is then transmitted and received by radio via a transmitting antenna and a receiving antenna. The AE signal received by the receiving antenna is input to an AE analyzer via an amplifier, a frequency-modulation receiving circuit, and a frequency demodulation circuit to diagnose an abnormality of the rotary part by the AE analyzer.

However, the conventional apparatus with an AE sensor has a problem that the transmitting side of the apparatus needs a power supply for amplifying an AE signal, thereby increasing the operating cost. The conventional apparatus also has a problem that since AE signals are transmitted using a transmitting antenna, the transmitting side of the apparatus needs a large space for mounting the transmitting antenna, and if the mounting space of the transmitting side of the apparatus is small, the apparatus could not be used.

When the AE sensor is mounted on a stationary part nearest the rotary part in order to keep a sufficient mounting space of the transmitting side, the problem in mounting the transmitting antenna can be solved. However, the conventional apparatus now has a problem that the AE signals become feeble so that effective AE signals cannot be thus captured by the AE sensor. Thus, it cannot be correctly determined whether the rotary part is abnormal or not.

### SUMMARY OF THE INVENTION

It is therefore an object of the present invention to provide a compact AE measuring device which does not require any power supply on the transmitting side of the AE measuring device to achieve a low operation cost and which is able to correctly detect AE signals. It is another object of the present invention to provide a compact power transmission device which does not require any power supply on the transmitting side of the power transmission device to achieve a low operation cost and which is able to correctly detect AE signals from a power transmission member which is a rotary part. It is a further object of the present invention to provide a compact rolling bearing device which does not require any power supply on the transmitting side of the rolling bearing device to achieve a low operation cost and which is able to correctly detect AE signals from a rotating wheel.

An acoustic emission measuring device according to the present invention comprises:
an acoustic emission sensor fixed to a rotary part;
a first coil directly or indirectly fixed to the rotary part, through which coil an electric current from the acoustic emission sensor flows; and
a second coil which is stationary and electromagnetically coupled to the first coil in a noncontact manner with a clearance in between.

The "acoustic emission (AE)" is herein defined as an elastic wave (oscillatory wave or sound wave) generated along with generation and/or development of a crack in a material, or abnormal abrasion or the like of the material.

In this AE measuring device, since the AE sensor is directly fixed to the rotary part, AE signals generated by the rotary part can be measured with a good sensitivity to correctly detect generation and/or development of a crack of the material of the rotary part or abnormal abrasion thereof.

Furthermore, in this AE measuring device, the AE sensor is directly fixed to the rotary part, and signal transmission between the rotary side of the AE measuring device and the stationary side of the AE measuring device is performed using the first coil and the second coil which are electromagnetically coupled to each other with a clearance in between, so that energy lost at signal transmission between the rotary side and the stationary side can be significantly reduced as compared with energy lost when an antenna is used and thereby no power supply (external power supply or battery) is required on the rotary side (transmitting side). Thus, the operating cost can be significantly reduced.

Furthermore, in this AE measuring device, any antenna is not required on the rotary side which rotates in synchronization with the rotary part, so that the rotary side of the AE measuring device can be made compact, thereby mitigating the limit of use of the AE measuring device against the size of the mounting space for the device.

In one embodiment, the AE measuring device further comprises a first yoke for the first coil and a stationary second yoke for the second coil, wherein the first yoke and the second yoke are facing each other with a clearance in between to constitute a magnetic circuit.

In this embodiment, magnetic lines of force are allowed to pass through the first yoke and the second yoke, so that energy lost when a signal is transmitted from the first coil to the second coil can be reduced.

In one embodiment, each of the first yoke and the second yoke comprises an outer cylindrical section, an inner cylindrical section disposed radially inside the outer cylindrical section, and an end face section connecting one axial end of the outer cylindrical section to one axial end of the inner cylindrical section. The first yoke and the second yoke are disposed facing each other in the axial direction in such a manner that the other end opposite to the end face section of the first yoke faces the other end opposite to the end face section of the second yoke with a clearance in between. The first coil is disposed between the inner cylindrical section and the outer cylindrical section of the first yoke, and the second coil is disposed between the inner cylindrical section and the outer cylindrical section of the second yoke.

In this embodiment, the first coil of the rotary side (transmitting side) of the AE measuring device is adjacent to the second coil of the stationary side (receiving portion) of the AE measuring device in the axial direction of the first coil, so that signals can be efficiently transmitted and received when there is a space adjacent to the first coil in the axial direction of the first coil.

Furthermore, in this embodiment, magnetic lines of force are allowed to pass through the inner cylindrical section, end face section, and outer cylindrical section of the first yoke, and the outer cylindrical section, end face section, and inner cylindrical section of the second yoke. Thus, the length of the closed loop formed by the magnetic lines of force can be reduced and the attenuation factor of the magnetic lines of force can be thus reduced, so that the signal transmission efficiency can be increased and AE signals can be thus correctly transmitted from the rotary side to the stationary side even if the AE signals are feeble.

In one embodiment, the first coil and the second coil are disposed concentrically, and at least a part of one of the first coil and the second coil is disposed inside the other of the first coil and the second coil.

In this embodiment, when there is no space adjacent to the first coil in the axial direction of the first coil, but there is a space adjacent to the first coil in the direction perpendicular to the axial direction of the first coil, signal transmission and reception can be performed between the rotary side and the stationary side.

In one embodiment, the AE sensor detects AEs having frequencies between 200 kHz and 500 kHz, inclusive.

In this embodiment, AEs can be detected with a high sensitivity.

A power transmission device according to the present invention comprises:
a housing;
a power transmission member which is a rotary part rotating relative to the housing;
an AE sensor fixed to the power transmission member;
a first coil directly or indirectly fixed to the power transmission member, through which coil an electric current from the AE sensor flows; and
a second coil which is stationary and electromagnetically coupled to the first coil in a noncontact manner with a clearance in between.

In this power transmission device, since the AE sensor is directly fixed to the power transmission member, AE signals generated by the power transmission member can be measured with a good sensitivity. Therefore, it is possible to correctly detect generation and/or development of a crack of the material of the power transmission member or abnormal abrasion thereof.

Furthermore, in this power transmission device, the AE sensor is directly fixed to the power transmission member, and signal transmission between the rotary side of the power transmission device and the stationary side of the power transmission device is performed using the first coil and the second coil which are electromagnetically coupled to each other with a clearance in between, so that energy lost at signal transmission between the rotary side and the stationary side can be significantly reduced as compared with energy lost when an antenna is used and thereby no power supply is required on the rotary side (transmitting side). Thus, the operating cost can be significantly reduced.

Furthermore, in this power transmission device, no power supply and antenna is required on the rotary side which rotates in synchronization with the rotary part, so that the rotary side parts can be made compact, thereby mitigating the limit of use of the power transmission device against the size of the mounting space for the power transmission device.

In one embodiment, the power transmission device further comprises a first yoke for the first coil and a stationary second yoke for the second coil, wherein the first yoke and the second yoke are facing each other with a clearance in between to constitute a magnetic circuit.

In this embodiment, magnetic lines of force are allowed to pass through the first yoke and the second yoke, so that energy lost when a signal is transmitted from the first coil to the second coil can be reduced.

In one embodiment, each of the first yoke and the second yoke comprises an outer cylindrical section, an inner cylindrical section disposed radially inside the outer cylindrical section, and an end face section connecting one axial end of the outer cylindrical section to one axial end of the inner cylindrical section. The first yoke and the second yoke are disposed facing each other in the axial direction in such a manner that the other end opposite to the end face section of the first yoke faces the other end opposite to the end face section of the second yoke with a clearance in between. And, the first coil is disposed between the inner cylindrical section and the outer cylindrical section of the first yoke, and the second coil is disposed between the inner cylindrical section and the outer cylindrical section of the second yoke.

In this embodiment, the first coil of the rotary side (transmitting side) is adjacent to the second coil of the stationary side (receiving side) in the axial direction of the first coil, so that signals can be efficiently transmitted and received when there is a space adjacent to the first coil in the axial direction of the first coil.

Furthermore, in this embodiment, magnetic lines of force are allowed to pass through the inner cylindrical section, end face section, and outer cylindrical section of the first yoke, and the outer cylindrical section, end face section, and inner cylindrical section of the second yoke. Thus, the length of the closed loop formed by the magnetic lines of force can be reduced and the attenuation factor of the magnetic lines of force can be thus reduced, so that the signal transmission efficiency can be increased and AE signals can be thus correctly transmitted from the rotary side to the stationary side even if the AE signals are feeble.

In one embodiment, the radius of a circle circumscribed around the first coil in a cross section perpendicular to the axis of the first coil is shorter than the radius of a circle inscribed in the second coil in a cross section perpendicular to the axis of the second coil, and the axis of the first coil is substantially parallel to the axis of the second coil. And, at least part of the first coil is disposed inside the second coil.

In this embodiment, when there is no space adjacent to the first coil in the axial direction of the first coil, but there is a space adjacent to the first coil in the direction perpendicular to the axial direction of the first coil, signal transmission and reception can be performed between the rotary side and the stationary side.

In one embodiment, the AE sensor detects AEs having frequencies between 200 kHz and 500 kHz, inclusive.

In this embodiment, AEs can be detected with a high sensitivity.

In one embodiment, the power transmission member is a pulley.

In this embodiment, since the AE sensor is directly fixed to the pulley, AE signals generated by the pulley can be measured with a good sensitivity.

A rolling bearing device according to the present invention comprises:
a first bearing ring which is a rotating wheel and has a raceway surface;
a second bearing ring which is a fixed wheel and has a raceway surface;
rolling elements disposed between the raceway surface of the first bearing ring and the raceway surface of the second bearing ring;
an AE sensor fixed to the first bearing ring;
a first coil directly or indirectly fixed to the first bearing ring, through which coil an electric current from the AE sensor flows; and
a second coil which is stationary and electromagnetically coupled to the first coil in a noncontact manner with a clearance in between.

In this rolling bearing device of the invention, since the AE sensor is directly fixed to the first bearing ring, AE signals generated by the first bearing ring can be measured with a good sensitivity. Therefore, it is possible to correctly detect generation and/or development of a crack of the material of the first bearing ring or abnormal abrasion thereof.

Furthermore, in this rolling bearing device, the AE sensor is directly fixed to the first bearing ring, and signal transmission between the rotary side and the stationary side is performed using the first coil and the second coil which are electromagnetically coupled to each other with a clearance in between, so that energy loss at signal transmission between the rotary side and the stationary side can be significantly reduced as compared with energy loss when an antenna is used. Therefore, no power supply is required on the rotary side (transmitting side). Thus, the operating cost can be significantly reduced.

Furthermore, in this rolling bearing device, no power supply and antenna is required on the rotary side which rotates in synchronization with the first bearing ring, so that the rotary side can be made compact, thereby mitigating the limit of use or placement of the rolling bearing device against the size of the mounting space for the rolling bearing device.

In one embodiment, the rolling bearing device further comprises a first yoke for the first coil and a stationary second yoke for the second coil, and the first yoke and the second yoke are facing each other with a clearance in between to constitute a magnetic circuit.

In this embodiment, magnetic lines of force are allowed to pass through the first yoke and the second yoke, so that energy lost when a signal is transmitted from the first coil to the second coil can be reduced.

In one embodiment, the first yoke and the second yoke have substantially the same shape, and each of the first yoke and the second yoke comprises an outer cylindrical section, an inner cylindrical section disposed inside the outer cylindrical section in the radial direction, and a ring end face section shaped like a hollow circular plate connecting one axial end of the outer cylindrical section to one axial end of the inner cylindrical section. The first yoke and the second yoke are disposed facing each other in the axial direction in such a manner that the other end opposite to the end face section of the first yoke faces the other end opposite to the end face section of the second yoke. The first coil is disposed between the inner cylindrical section and the outer cylindrical section of the first yoke, and the second coil is disposed between the inner cylindrical section and the outer cylindrical section of the second yoke.

In this embodiment, the first coil of the rotary side (transmitting portion) is adjacent to the second coil of the stationary side (receiving portion) in the axial direction of the first coil, so that signals can be efficiently transmitted when there is a space adjacent to the first coil in the axial direction of the first coil.

Furthermore, in this embodiment, magnetic lines of force are allowed to pass through the inner cylindrical section, end face section, and outer cylindrical section of the first yoke, and the outer cylindrical section, end face section, and inner cylindrical section of the second yoke. Thus, the length of the closed loop formed by the magnetic lines of force can be reduced and the attenuation factor of the magnetic lines of force can be thus reduced, so that the signal transmission efficiency can be increased and AE signals can be thus correctly transmitted from the rotary side to the stationary side even if the AE signals are feeble.

In one embodiment, the radius of a circle circumscribed around the first coil in a cross section perpendicular to the axis of the first coil is shorter than the radius of a circle inscribed in the second coil in a cross section perpendicular to the axis of the second coil, and the axis of the first coil is substantially parallel to the axis of the second coil. And, at least a part of the first coil is disposed inside the second coil.

In this embodiment, when there is no space adjacent to the first coil in the axial direction of the first coil, but there is a space adjacent to the first coil in the direction perpendicular to the axial direction of the first coil, signal transmission and reception can be performed between the rotary side and the stationary side.

In one embodiment, the AE sensor detects AEs having frequencies between 200 kHz and 500 kHz, inclusive.

In this embodiment, AEs can be detected with a high sensitivity.

### BRIEF DESCRIPTION OF THE DRAWINGS

Fig. 1 shows the appearance of part of an AE measuring device which is a first embodiment of the present invention.
Fig. 2 is a cross-sectional view showing a main part of a chain V-pulley continuously variable transmission as a power transmission device, which is a second embodiment of the present invention including the AE measuring device of the first embodiment and has embedded piezoelectric elements.
Fig. 3 is a schematic exploded view illustrating the inside structure of a first coil case which is included in the AE measuring device of the first embodiment, or in the AE measuring device which is part of the power transmission device of the second embodiment, or in the AE measuring device which is part of a rolling bearing device which is the third embodiment of the present invention.
Fig. 4 shows the attenuation factor of the signal level at a receiving side (i.e., a stationary side) to the signal level at a transmitting side (i.e., a rotary side).
Fig. 5 is a schematic diagram showing an AE measuring device which is a fourth embodiment of the present invention and a rolling bearing device which is a fifth embodiment of the present invention.

### DETAILED DESCRIPTION OF THE INVENTION

The present invention will be described below according to embodiments shown in the figures.

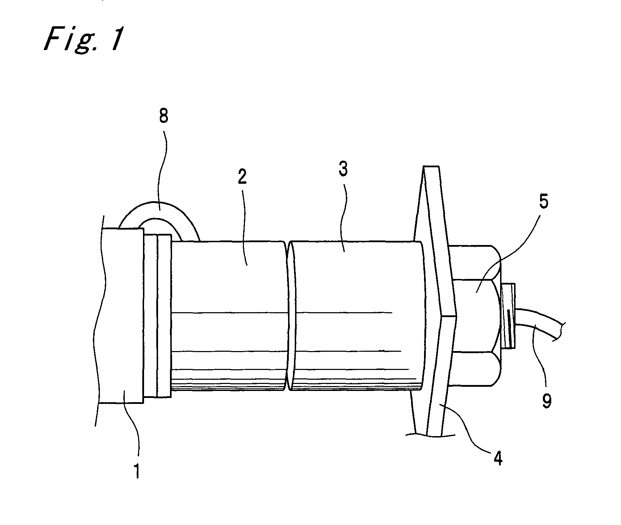

Fig. 1 shows the appearance of part of an acoustic emission (AE) measuring device which is a first embodiment of the present invention.

The AE measuring device includes a first coil case 2 and a second coil case 3. The first coil case 2 is shaped almost like a cylinder. The first coil case 2 is fixed to one axial end face of the rotating shaft 1 and rotates in synchronization with the rotating shaft 1. The second coil case 3 has about the same shape as the first coil case 2. The second coil case 3 is adjacent to the first coil case 2 via a small clearance in the axial direction of the first coil case 2. The second coil case 3 is fastened to a clamp member 4 fixed to a housing accommodating the rotating shaft 1 with a nut 5 so that the second coil case 3 is stationary relative to the housing.

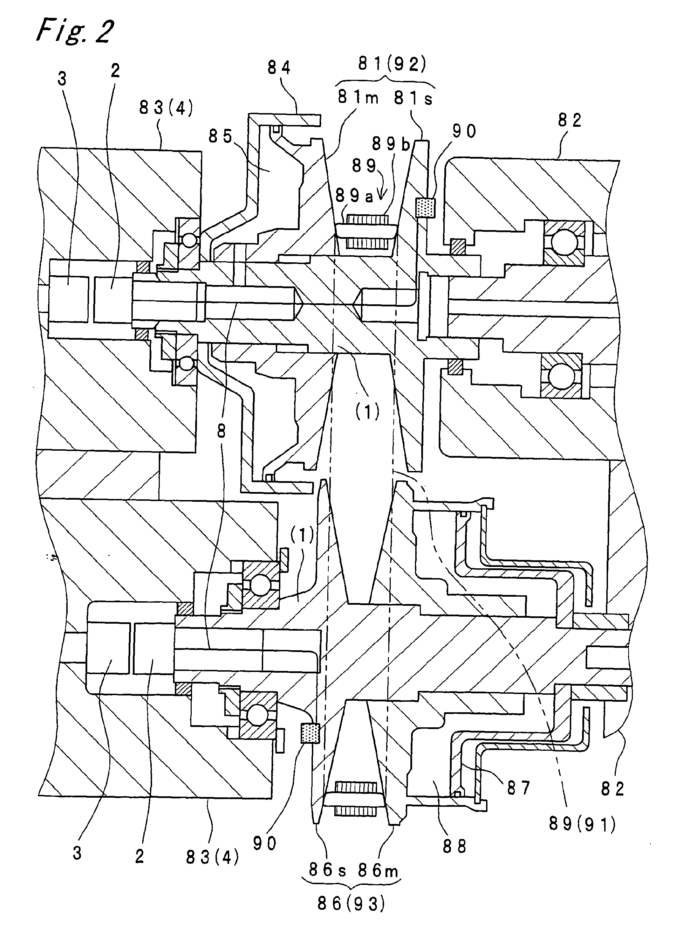

The AE measuring device has a piezoelectric element (not shown) as an example of an AE sensor. The piezoelectric element is embedded in the back of a stationary pulley half body 81s, 86s as described below in detail with reference to Fig. 2. The piezoelectric element detects AEs having frequencies between 200 kHz and 500 kHz, inclusive. The AE measuring device feeds an electric current, which is generated by the piezoelectric element when an external force is applied thereto, through the first coil disposed in the first coil case 2 via an electric wire 8 covered with an insulator. Furthermore, the AE measuring device feeds an electric current, which is generated based on the law of electromagnetic induction in the second coil disposed in the second coil case 3 which is magnetically coupled with the first coil, to an AE signal analyzer (not shown) via an electric wire 9 covered with an insulator.

Fig. 2 is a cross-sectional view showing a main part of a chain V-pulley continuously variable transmission as a power transmission device, which is a second embodiment of the present invention. The chain V-pulley continuously variable transmission includes AE measuring devices of the first embodiment of the present invention which have the embedded piezoelectric elements as described above. In Fig. 2, the reference numeral 90 denotes the piezoelectric elements which are AE sensors. In Fig. 2, the drive pulley 81 as a power transmission member has a stationary pulley half body 81s which does not move in the axial direction (i.e., the lateral direction in the figure), and a movable pulley half body 81m which is movable in the axial direction. The stationary pulley half body 81s is supported so as to be able to rotate freely by supporters 82 and 83 of the car body. The movable pulley half body 81m is supported by the stationary pulley half body 81s so as to be able to move in the axis direction relative to the stationary pulley half body 81s. An oil chamber 85 is formed between the back of the movable pulley half body 81m and a cylinder cover 84, and the movable pulley half body 81m is moved in the axial direction by controlling the pressure of oil in the oil chamber 85.

A driven pulley 86 as a power transmission member also includes a stationary pulley half body 86s which does not move in the axial direction, and a movable pulley half body 86m which is movable in the axial direction. The stationary pulley half body 86s is supported so as to be able to rotate freely by supporters 82 and 83 of the car body. The movable pulley half body 86m is supported by the stationary pulley half body 86s so as to be able to move in the axis direction relative to the stationary pulley half body 86s. An oil chamber 88 is formed between the back of the movable pulley half body 86m and a cylinder cover 87, and the movable pulley half body 86m is moved in the axial direction by controlling the pressure of oil in the oil chamber 88.

A power transmission chain 89 as a power transmission member is composed of a plurality of ring plates 89b which are coupled with each other via load pins 89a so as to be endless and be able to bend freely. The power transmission chain 89 runs between the drive pulley 81 and the driven pulley 86, and both end faces of the load pins 89a come into contact with the conical surfaces of the pulleys 81 and 86. Frictional force caused by this contact allows power transmission. Furthermore, the diameter of the power transmission chain 89 around the pulleys 81 and 86 is steplessly varied by controlling the pressures of oil in the oil chambers 85 and 88, so that the transmission gear ratio varies steplessly.

The piezoelectric elements of the AE measuring devices are fixed to the chain V-pulley continuously variable transmission as the power transmission device of the second embodiment of the present invention. However, an AE measuring device as configured above may be fixed to a rolling bearing as a matter of course. A rolling bearing device which is the third embodiment of the present invention may be formed like this. For example, although not shown, a rolling bearing device which has a ball bearing and an AE sensor described above may be configured as described below. When described with reference to Fig. 1, an inner ring (not shown) as the first bearing ring of the ball bearing is fit around the rotating shaft 1, and an outer ring (not shown) as the second bearing ring of the ball bearing is fit in and fixed to the housing in which the rotating shaft 1 is accommodated. A piezoelectric element is then embedded in an axial end face of the inner ring. The ball bearing and the piezoelectric element are disposed on the left side of the drawing sheet on the rotating shaft 1. The ball bearing and the piezoelectric element are disposed like this to form the rolling bearing device of the third embodiment of the present invention having a ball bearing and an AE sensor described above.

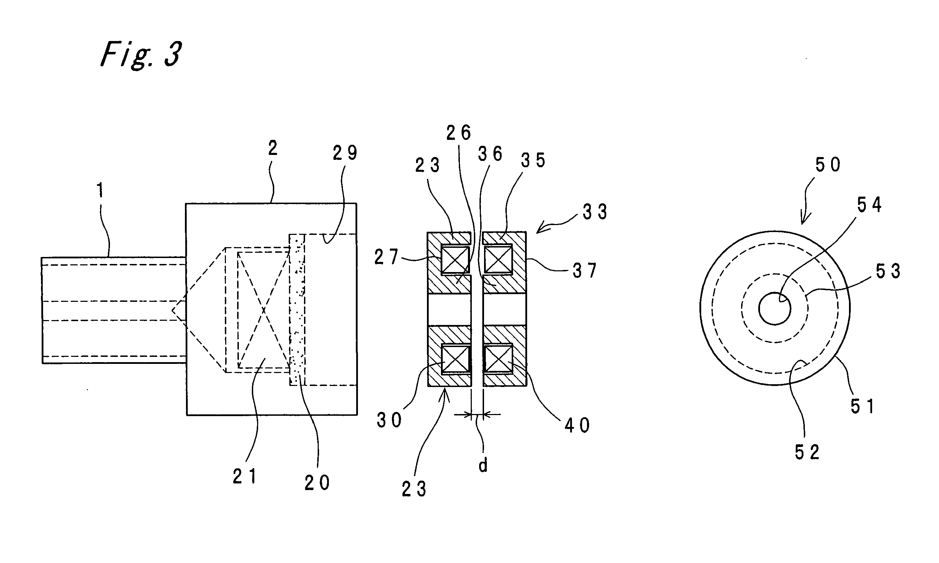

Fig. 3 is a schematic exploded view illustrating the inside structure of the first coil case 2 which is part of the AE measuring device of the first embodiment, part of the AE measuring device of the power transmission device of the second embodiment, or part of the AE measuring device of the rolling bearing device of the third embodiment.

As shown in Fig. 3, an axial end face opposite from the rotating shaft of the first coil case 2 has a circular recess 29 the axis of which is substantially parallel to the axis of the first coil case 2. In the recess 29, an electronic circuit 21 formed on a printed board 20 and a first ferrite core 23 as an example of the first yoke are disposed in this order in the axis direction at the increasing distances from an end face of the rotating shaft 1. (In Fig. 3, the first ferrite core 23 is shown apart from the first coil case 2).

The electronic circuit 21 is a passive circuit which needs no power supply. The electronic circuit 21 has a low-pass filter for cutting low frequency mechanical noises and a waveform shaping circuit.

The first ferrite core 23 has an outer cylindrical section 25, an inner cylindrical section 26, and an end face section 27 connecting one axial end of the outer cylindrical section 25 to one axial end of the inner cylindrical section 26. The outer diameter of the outer cylindrical section is about the same as the diameter of the opening of the recess 29, and the outer cylindrical section 25 is thus fit in and fixed to the recess 29. The end face section 27 is shaped like a ring expanding in the radial direction of the inner cylindrical section 26 (or the outer cylindrical section 25). As shown in Fig. 3, the first ferrite core 23 is generally U-shaped in axial half cross sections of the outer cylindrical section 25, thus being opened at an axial end face.

Between the inner cylindrical section 26 and the outer cylindrical section 25, a first coil 30 is disposed. In other words, an electric wire is wound around the inner cylindrical section 26. In Fig. 3, the reference numeral 33 denotes a second ferrite core as an example of the second yoke. The second ferrite core 33 has substantially the same shape as the first ferrite core 23. For the sake of simplicity of illustration, the second coil case is not shown in Fig. 3. However, as in the first coil case 2, the second coil case (see Fig.1) also has a recess shaped like a cylinder, in which the second ferrite core 33 is fitted. The second ferrite core 33 is disposed so as to face the first ferrite core 23 via a small clearance or gap, d, in the axial direction in such a manner that the opening of the second ferrite core 33 faces the opening of the first ferrite core 23 in the axial direction. Between the inner cylindrical section 36 and the outer cylindrical section 35 of the second ferrite core 33, a second coil 40 is disposed. In other words, an electric wire is wound around the inner cylindrical section 36. The second coil 40 is stationary and electromagnetically coupled to the first coil 30 in a noncontact manner with a clearance in between, and the first ferrite core 23 and the second ferrite core 33 are facing each other with a clearance in between to constitute a magnetic circuit.

In Fig. 3, the reference numeral 50 denotes the structures in the radial direction of the outer cylindrical section 25, 35 and the inner cylindrical section 26, 36 of the ferrite core 23, 33. In this figure, the reference numeral 51 denotes the outer periphery of the outer cylindrical section 25, 35, the reference numeral 52 denotes the inner periphery of the outer cylindrical section 25, 35, the reference numeral 53 denotes the outer periphery of the inner cylindrical section 26, 36, and the reference numeral 54 denotes the inner periphery of the inner cylindrical section 26, 36. As shown with the reference numeral 50, the axis of the outer cylindrical section 25, 35 substantially matches the axis of the inner cylindrical section 26, 36.

Conventionally, when a detection signal detected by a sensor mounted on a rotary part is transmitted to a stationary part by radio, signal energy lost when the signal is transmitted from the rotary side to the stationary side is large, so that those skilled in the art have considered that if a detection signal detected by the sensor is transmitted to the stationary side without being amplified by an amplifier or the like using a power supply such as a battery, a signal which allows information analysis (a signal having a large S/N ratio) would not be able to be sent to the stationary side. However, the inventors have found out that when a detection signal is an AE signal (that is, a sporadic signal having a very short duration of about 100 microseconds and a waveform shaped almost like a pulse, which has a large time fluctuation in signal level), even if the detection signal is not amplified at the rotary side, but if a first coil is disposed at the rotary side and a second coil which is electromagnetically coupled with the first coil is disposed at the stationary side, a signal having a large S/N ratio can be transmitted from the first coil to the second coil, that is, from the rotary side to the stationary side, based on the law of electromagnetic induction.

In the above configuration, when a piezoelectric element which is an AE sensor is deformed by mechanical force given by an AE and outputs an AE signal (current signal) having the width of about 100 microseconds, the AE signal passes through an electronic circuit by which low frequency mechanical noises included in the AE signal are cut and the waveform of the AE signal is shaped. After that, an AE signal (current signal) obtained after cutting the low frequency noises flows through the first coil 30. Then a magnetic field produced by the first coil 30 causes a magnetic field in the inner cylindrical section 36 of the second ferrite core 33 electromagnetically coupled to the first ferrite core 23 so that an electric current is produced in the second coil 40 by the law of electromagnetic induction. After that, the AE signal sent to the stationary side as described above is amplified by an amplifier and then analyzed by a microcomputer to detect AEs generated by the power transmission members 91, 92, 93.

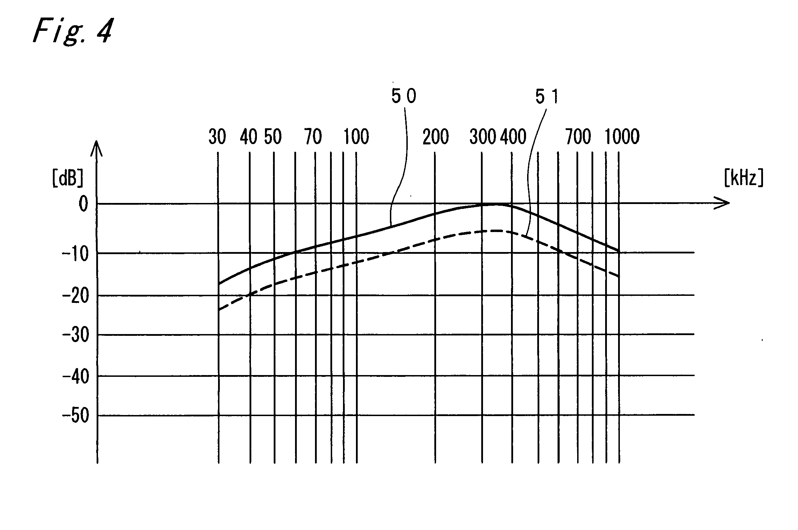

Fig. 4 shows the attenuation factor of the signal level of the receiving side (stationary side) relative to the signal level of the transmitting side (rotary side), obtained when the AE sensor and the electronic circuit are omitted from the AE measuring device of the first embodiment and a frequency generator is directly connected to the first coil to transmit a false signal. Fig. 4 also shows the attenuation factor of the signal level of the receiving side (stationary side) relative to the signal level of the transmitting side (rotary side), obtained when the AE sensor and electronic circuit are omitted from the AE measuring device which is part of the power transmission device of the second embodiment and a frequency generator is directly connected to the first coil to transmit a false signal. Fig. 4 also shows the attenuation factor of the signal level of the receiving side (stationary side) relative to the signal level of the transmitting side (rotary side), obtained when the AE sensor and electronic circuit are omitted from the AE measuring device which is part of the rolling bearing device of the third embodiment and a frequency generator is directly connected to the first coil to transmit a false signal.

In Fig. 4, the waveform 50 is a received waveform obtained when the rotating shaft 1 is not rotated, and the waveform 51 is a received waveform obtained when the rotating shaft 1 is rotated. The reason why the attenuation factor of the received waveform 51 obtained when the rotating shaft 1 is rotated is larger than the attenuation factor of the received waveform 50 obtained when the rotating shaft 1 is not rotated as shown in Fig. 4 is that the value of an electric current flowing in the first coil 30 decreases along with rotation of the first coil 30. As shown in Fig. 4, it is understood that when the frequency of the transmitted signal is between 200 kHz and 500 kHz, the received signal strength is nearly equal to the transmitted signal strength, and the attenuation factor is thus very small, in the case of the received waveform 50. As is apparent from this, when signals having frequencies between 200 kHz and 500 kHz, inclusive, are detected by an AE sensor, AE signals can be transmitted efficiently.

In the first and second embodiments, an AE sensor is directly fixed to the stationary pulley half body 81s, 86s as an example of the rotary part, as described above, so that AE signals generated by the aforementioned power transmission members 91, 92, 93 (power transmission chain 89, drive pulley 81, driven pulley 86) can be measured with a good sensitivity to correctly detect generation and/or development of a crack in the material of the power transmission members or abnormal abrasion thereof.

Furthermore, in the first and second embodiments, an AE sensor is directly fixed to the stationary pulley half body 81s, 86s, and signal transmission between the rotary side and the stationary side is performed using the first coil 30 and the second coil 40 which are electromagnetically coupled to each other with a clearance in between, so that energy loss at signal transmission between the rotary side and the stationary side can be significantly reduced as compared with energy loss produced when an antenna is used. Therefore, no power supply is required on the rotary side (transmitting side). Thus, the operating cost can be significantly reduced.

Furthermore, in the first and second embodiments, neither power supply nor antenna is required on the rotary side of the device, so that the rotary side portion of the device can be made compact, thereby mitigating the limit of use of the AE measuring device relative to the size of the mounting space for the device.

In the first and third embodiments, an AE sensor is directly fixed to the inner ring which is a rotating wheel, so that AE signals generated by the inner ring can be measured with a good sensitivity. Therefore, it is possible to correctly detect generation and/or development of a crack in the material of the inner ring and/or abnormal abrasion thereof.

Furthermore, in the first and third embodiments, an AE sensor is directly fixed to the inner ring, and signal transmission between the rotary side and the stationary side is performed using the first coil 30 and the second coil 40 which are electromagnetically coupled to each other with a clearance in between, so that energy loss at signal transmission between the rotary side and the stationary side can be significantly reduced as compared with energy loss produced when an antenna is used. Therefore no power supply is required on the rotary side (transmitting side). Thus, the operating cost can be significantly reduced.

Furthermore, in the first and third embodiments, neither power supply nor antenna is required on the rotary side of the device which rotates in synchronization with the inner ring, so that the rotary side of the device can be made compact, thereby mitigating the limit of use of the AE measuring device against the size of the mounting space for the device.

In the first, second, and third embodiments, each of which includes the first ferrite core 23 for the first coil 30, and the stationary second ferrite core 33 for the second coil 40, the first ferrite core 23 and the second ferrite core 33 are facing each other with a clearance in between to constitute a magnetic circuit. Therefore, magnetic lines of force are allowed to pass through the first ferrite core 23 and the second ferrite core 33, and energy loss produced when an AE signal is transmitted from the first coil 30 to the second coil 40 can be thus reduced.

Furthermore, in the first, second, and third embodiments, the first ferrite core and the second ferrite core 33 have about the same shape, and the ferrite core 23 and the second ferrite core 33 are shaped like the letter of U in half cross sections parallel with the axis, with the first coil 30 wound around the inner cylindrical section 26 of the first ferrite core 23, and the second coil 40 wound around the inner cylindrical section 36 of the second ferrite core 33. Therefore, magnetic lines of force are allowed to pass through the inner cylindrical section 26, end face section 27, and outer cylindrical section 25 of the first ferrite core 23, and then the outer cylindrical section 35, end face section 37, and inner cylindrical section 36 of the second ferrite core 33, in this order. Thus, the length of the closed loop formed by the magnetic lines of force can be reduced and the attenuation factor of the magnetic lines of force can be thus reduced, so that the signal transmission efficiency can be increased and an AE signal can be thus correctly transmitted from the rotary side to the stationary side even if the AE signal is feeble. Furthermore, the first coil 30 and the second coil 40 are designed to be disposed in opposition to each other in the axial direction. Therefore, even when there is no installation space other than a space adjacent to the first coil 30 in the axial direction, a signal can be efficiently transmitted and received.

Furthermore, in the first, second, and third embodiments, the AE sensor detects AEs having frequencies between 200 kHz and 500 kHz, inclusive, so that AEs can be detected with a high sensitivity.

In the first, second, and third embodiments, the first and second ferrite cores 23 and 33 are shaped to have the outer cylindrical sections 25 and 35, the inner cylindrical sections 26 and 36, and the end face sections 27 and 37, respectively. However, in the present invention, the first and second yokes may be rods shaped like the letter of U, like a U-magnet, or like the letter of V, the rods each having two ends and being symmetric with respect to a plane. And, the first and second yokes consisting of the thus-shaped curved or bent rods each having two ends may be disposed facing each other with a small clearance in between in such a manner that the two ends of the first yoke face the two ends of the second yoke, respectively, and the electric wire of the first coil may be wound around one of the yokes and the electric wire of the second coil may be wound around the other of the yokes.

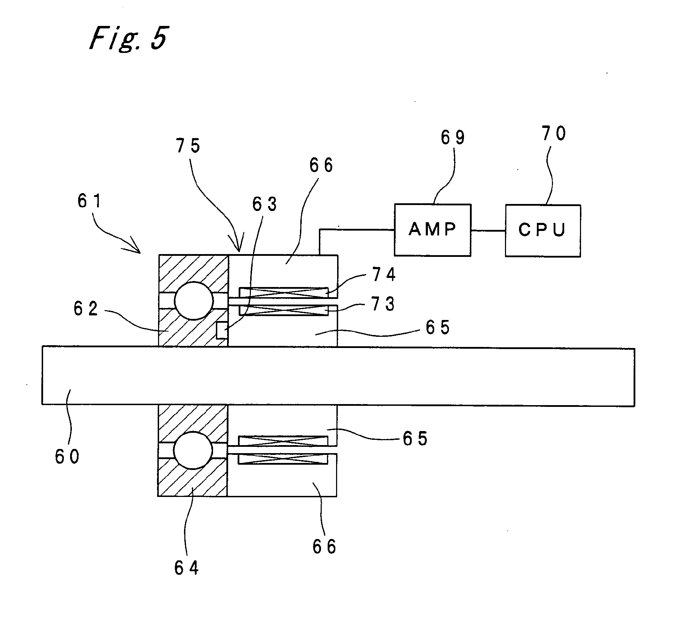

Fig. 5 is a schematic diagram showing an AE measuring device which is the fourth embodiment of the present invention and a rolling bearing device which is the fifth embodiment of the present invention.

The AE measuring device of the fourth embodiment is different from the first embodiment in that the first coil and the second coil are not facing each other in the axial direction of an inner ring 62 which is an AE-measured member, but are facing each other in the radial direction of the inner ring 62. Description about operations, effects, and variations of the AE measuring device of the fourth embodiment in common with the AE measuring device of the first embodiment is omitted, and only configurations, operations, effects, and variations which are different from those of the AE measuring device of the first embodiment will be described below.

Furthermore, the rolling bearing device of the fifth embodiment is different from the third embodiment in that the first coil and the second coil are not facing each other in the axial direction of an inner ring 62 which is a first bearing ring, but are facing each other in the radial direction of the inner ring 62. Description about operations, effects, and variations of the rolling bearing device of the fifth embodiment in common with the rolling bearing device of the third embodiment is omitted, and only configurations, operations, effects, and variations which are different from those of the rolling bearing device of the third embodiment will be described below.

As shown in Fig. 5, in the fourth embodiment, a piezoelectric element 63 which is an AE sensor is embedded in one axial end face of the inner ring 62 of the ball bearing 61 which is fit around and fixed to the rotating shaft 60. Furthermore, a case (inner cylinder ferrite core which is a first ferrite core) 65 shaped like a tire and accommodating a first coil (inner cylinder coil) 73 is fit around and fixed to the rotating shaft 60 in the state that the case is in contact with an axial end face of the inner ring 62 to which the piezoelectric element 63 is fixed. Also, a case (outer cylinder ferrite core which is a second ferrite core) 66 shaped like a tire and accommodating a second coil (outer cylinder coil) 74 is fit in and fixed to a housing or the like in which the outer ring 64 of the ball bearing 61 is fit. The case (second ferrite core) 66 faces the case (first ferrite core) 65 in the radial direction and is in contact with an axial end face of the outer ring 64. The first coil 73 and the second coil 74 are disposed concentrically and the first coil 73 is disposed inside the second coil 74. The second coil 74 is connected with a CPU 70 via an amplifier 69.

On the other hand, the rolling bearing device of the fifth embodiment has a ball bearing 61 and an AE measuring device 75. The ball bearing 61 has the outer ring 64, the inner ring 62, and balls 67, and the AE measuring device 75 has an AE sensor 63 and cases 65 and 66.

In the above configuration, when the piezoelectric element 63 detects an AE of the inner ring 62, an electric current flows sporadically in the first coil 73, and magnetic lines of force extending almost in the axial direction of the rotating shaft 60 are generated in the rotating shaft 60 by the sporadic electric current. At that time, according to the law of electromagnetic induction, an electric current is produced in the second coil 74 by a change of the magnetic field caused by the generation of the magnetic lines of force. In this way, AE signals are transmitted from the rotary side to the stationary side.

In the fourth and fifth embodiments, the first coil 73 and the second coil 74 are disposed to face each other in the radial direction of the rotating shaft 60 (ball bearing 61), so that when there is no space adjacent to the first coil 73 in the axial direction of the first coil 73, but there is a space adjacent to the first coil 73 in the direction perpendicular to the axial direction of the first coil 73, signal transmission and reception can be performed between the rotary side and the stationary side.

In the fourth and fifth embodiments, the first coil 73 and the second coil 74 are disposed concentrically and the first coil 73 is disposed radially inside the second coil 74. But it is only necessary to dispose the first coil and the second coil in such a manner that the axis of the first coil and the axis of the second coil are substantially parallel and that at least part of the first coil is disposed inside the second coil. Furthermore, when the outer ring of the rolling bearing is a rotating wheel, and the inner ring of the rolling bearing is a fixed wheel, the first coil and the second coil may be disposed concentrically and at least part of the second coil may be disposed inside the first coil.

Furthermore, in the first or fourth embodiment, an AE sensor is embedded in a pulley or the inner ring of a rolling bearing. However, needless to say, an AE measuring device according to the present invention is able to detect not only AEs of a pulley or the inner ring of a rolling bearing but also AEs of any rotary part such as a power transmission member including a pulley, a turbine and/or rotating shaft of a generator, or the like.

Furthermore, in the third or fifth embodiment, the AE sensor is embedded in the inner ring, which is a rotating wheel, of the ball bearing. However, it is a matter of course that when the outer ring of the ball bearing is a rotating wheel, an AE sensor is fixed to the outer ring of the ball bearing. Furthermore, in the present invention, an AE sensor may be fixed to a rotating wheel (an outer ring or an inner ring) of a roller bearing (such as a tapered roller bearing, cylindrical roller bearing, or spherical roller bearing) to constitute a rolling bearing device. Furthermore, in the present invention, an AE sensor may be fixed not only to a radial bearing but also the rotating wheel of a thrust bearing to constitute a rolling bearing device.

## Claims

1. An acoustic emission measuring device, comprising:
an acoustic emission sensor fixed to a rotary part;
a first coil directly or indirectly fixed to the rotary part, through which coil an electric current from the acoustic emission sensor flows; and
a second coil which is stationary and electromagnetically coupled to the first coil in a noncontact manner with a clearance in between.

2. An acoustic emission measuring device as claimed in Claim 1, further comprising a first yoke for the first coil and a stationary second yoke for the second coil, wherein the first yoke and the second yoke are facing each other with a clearance in between to constitute a magnetic circuit.

3. An acoustic emission measuring device as claimed in Claim 2, wherein:
each of the first yoke and the second yoke comprises an outer cylindrical section, an inner cylindrical section disposed radially inside the outer cylindrical section, and an end face section connecting one axial end of the outer cylindrical section to one axial end of the inner cylindrical section;
the first yoke and the second yoke are disposed facing each other in the axial direction in such a manner that the other end opposite to the end face section of the first yoke faces the other end opposite to the end face section of the second yoke with a clearance in between; and
the first coil is disposed between the inner cylindrical section and the outer cylindrical section of the first yoke, and the second coil is disposed between the inner cylindrical section and the outer cylindrical section of the second yoke.

4. An acoustic emission measuring device as claimed in Claim 1, wherein:
the first coil and the second coil are disposed concentrically; and
at least a part of one of the first coil and the second coil is disposed inside the other of the first coil and the second coil.

5. An acoustic emission measuring device as claimed in Claim 1, wherein the acoustic emission sensor detects acoustic emissions having frequencies between 200 kHz and 500 kHz, inclusive.

6. A power transmission device, comprising:
a housing;
a power transmission member which is a rotary part rotating relative to the housing;
an acoustic emission sensor fixed to the power transmission member;
a first coil directly or indirectly fixed to the power transmission member, through which coil an electric current from the acoustic emission sensor flows; and
a second coil which is stationary and electromagnetically coupled to the first coil in a noncontact manner with a clearance in between.

7. A power transmission device as claimed in Claim 6, further comprising a first yoke for the first coil and a stationary second yoke for the second coil, wherein the first yoke and the second yoke are facing with each other with a clearance in between to constitute a magnetic circuit.

8. A power transmission device as claimed in Claim 7, wherein:
each of the first yoke and the second yoke comprises an outer cylindrical section, an inner cylindrical section disposed radially inside the outer cylindrical section, and an end face section connecting one axial end of the outer cylindrical section to one axial end of the inner cylindrical section;
the first yoke and the second yoke are disposed facing each other in the axial direction in such a manner that the other end opposite to the end face section of the first yoke faces the other end opposite to the end face section of the second yoke with a clearance in between; and
the first coil is disposed between the inner cylindrical section and the outer cylindrical section of the first yoke, and the second coil is disposed between the inner cylindrical section and the outer cylindrical section of the second yoke.

9. A power transmission device as claimed in Claim 6, wherein:
the first coil and the second coil are disposed concentrically; and
at least a part of one of the first coil and the second coil is disposed inside the other of the first coil and the second coil.

10. A power transmission device as claimed in Claim 6, wherein the acoustic emission sensor detects acoustic emissions having frequencies between 200 kHz and 500 kHz, inclusive.

11. A power transmission device as claimed in Claim 6, wherein the power transmission member is a pulley.

12. A rolling bearing device, comprising:
a first bearing ring which is a rotating wheel and has a raceway surface;
a second bearing ring which is a fixed wheel and has a raceway surface;
rolling elements disposed between the raceway surface of the first bearing ring and the raceway surface of the second bearing ring;
an acoustic emission sensor fixed to the first bearing ring;
a first coil directly or indirectly fixed to the first bearing ring, through which coil an electric current from the acoustic emission sensor flows; and
a second coil which is stationary and electromagnetically coupled to the first coil in a noncontact manner with a clearance in between.

13. A rolling bearing device as claimed in Claim 12, further comprising a first yoke for the first coil and a stationary second yoke for the second coil, wherein the first yoke and the second yoke are facing each other with a clearance in between to constitute a magnetic circuit.

14. A rolling bearing device as claimed in Claim 13, wherein:
each of the first yoke and the second yoke comprises an outer cylindrical section, an inner cylindrical section disposed inside the outer cylindrical section in the radial direction, and a ring end face section connecting one axial end of the outer cylindrical section to one axial end of the inner cylindrical section;
the first yoke and the second yoke are disposed facing each other in the axial direction in such a manner that the other end opposite to the end face section of the first yoke faces the other end opposite to the end face section of the second yoke with a clearance in between; and
the first coil is disposed between the inner cylindrical section and the outer cylindrical section of the first yoke, and the second coil is disposed between the inner cylindrical section and the outer cylindrical section of the second yoke.

15. A rolling bearing device as claimed in Claim 12, wherein:
the first coil and the second coil are disposed concentrically; and
at least a part of one of the first coil and the second coil is disposed inside the other of the first coil and the second coil.

16. A rolling bearing device as claimed in Claim 12, wherein the acoustic emission sensor detects acoustic emissions having frequencies between 200 kHz and 500 kHz, inclusive.
